# EUROPÄISCHE PATENTSCHRIFT

(11) **EP 1 669 934 B1**
(45) Veröffentlichungstag und Bekanntmachung des Hinweises auf die Patenterteilung: **30.10.2019**
(21) Anmeldenummer: 05026290.6
(22) Anmeldetag: 02.12.2005
(51) Int. Cl.: G07B 15/02, G07F 7/08, G07F 7/00

(54) **Verfahren zur automatisierten Erfassung der Benutzung kostenpflichtiger Transportmittel zur Personbeförderung**
Method for automatically recording the use of fee-based vehicles and for deducting the fees
Méthode automatique de détecter l'utilisation des vehicules payants et de facturer le prix de voyage

(30) Priorität: 02.12.2004 EP 04028569; 02.12.2004 DE 102004058273; 16.12.2004 DE 102004061180
(43) Veröffentlichungstag der Anmeldung: 14.06.2006
(60) Teilanmeldung: 19155256.1
(73) Patentinhaber: mcity GmbH, 41238 Mönchengladbach (DE)
(72) Erfinder: Stoffelsma, Bouke, 41239 Mönchengladbach (DE); Feiter, Manfred, 41238 Mönchengladbach (DE)
(74) Vertreter: Rausch Wanischeck-Bergmann Brinkmann

(56) Entgegenhaltungen:
- EP-A- 1 089 237
- WO-A-01/03075
- WO-A-01/69540
- WO-A-02/056237
- DE-A1- 19 957 660
- US-A1- 2003 164 399

## Beschreibung

Die vorliegende Erfindung betrifft ein Verfahren zur automatisierten Erfassung der Benutzung kostenpflichtiger Transportmittel zur Personenbeförderung.

Bislang wird die Benutzung kostenpflichtiger Transportmittel, insbesondere des öffentlichen Personenverkehrs, überwiegend in Form von auf Papier gedruckten Fahrkarten abgewickelt. Diese Fahrkarten sind jedoch umständlich in der Handhabung und relativ einfach zu fälschen. Aus dem Stand der Technik sind darüber hinaus Fahrkartensysteme bekannt, die auf sogenannten Smartcards basieren. Dieses können sowohl kontaktbehaftete Karten (klassische Chipkarten) als auch kontaktlose Karten (Transponderkarten) als auch Mischformen (Dual-Interface-Karten) sein. Diese Smartcards enthalten für die Fahrausweiserhebung relevante Daten (Fahrausweisdaten und/oder Tarifdaten).

Die Verarbeitung der Smartcards im Rahmen der Fahrpreiserhebung (Schreib-Lesevorgänge an Automaten, Durchgangssperren, Kontrollgeräten, personenbesetzten Verkaufsstellen und anderen Stellen des öffentlichen Personenverkehrs) erfolgt über eine entsprechende technische Ticketing-Infrastruktur der jeweiligen Verkehrsbetriebe. Es kommt zu einem erheblichen Aufkommen an Kommunikationssignalen im Bereich der Geräte, welche ihrerseits wiederum mit Zentraleinheiten zu Zwecken der Tarifgestaltung, Nutzungsauswertung und dergleichen in Verbindung stehen müssen.

Bei Systemen, bei welchem der Öffentliche Nahverkehr überwiegend mit Hilfe von Fahrscheinen aus Papier abgewickelt wird, die vor Fahrtantritt für eine festzulegende Strecke gekauft oder entwertet werden müssen, muß der Fahrgast die gekaufte Strecke fahren oder den Fahrschein ganz oder teilweise verfallen lassen. Ein Kontrolleur kann durch bloßes Ansehen des Fahrscheins prüfen, ob der Fahrschein für die befahrene Strecke Gültigkeit besitzt.

Seit mehreren Jahren gibt es im Stand der Technik unterschiedliche Verfahren, den Fahrschein aus Papier durch ein elektronisches Ticket zu ersetzen. Die Verfahren ermöglichen eine automatische Ermittlung und Abrechnung des Fahrpreises.

Aus dem Stand der Technik sind folgende Verfahren bekannt, die eine bequemere Abrechnung ermöglichen sollen:
Der Rhein-Main-Verkehrsverbund betreibt in Hanau probeweise ein so genanntes "Check-In/Check-Out"-System, bei dem der Fahrgast sich mit Hilfe einer Chipkarte beim Ein- und Aussteigen an einem Terminal im Transportmittel identifiziert. Ein Hintergrundsystem errechnet, welche Strecken der Kunde tatsächlich gefahren ist und bucht die ermittelten Fahrpreise auf ein mit der Chipkarte verknüpftes Konto.

Aus der PCT-Anmeldung NL01/00215 ist ein Verfahren bekannt, bei dem der Fahrgast ein mobiles Gerät (zum Beispiel ein Mobiltelefon oder einen Transponder) mit einer ihm zugeordneten Nummer benutzt, um automatisch identifiziert zu werden, wenn er sich in einem Transportmittel des öffentlichen Nahverkehrs aufhält. Das Transportmittel registriert, wo der Fahrgast das Transportmittel betritt, und wo er das Transportmittel verlässt. I.d.R. werden diese Daten an ein Hintergrundsystem übermittelt, das auf Basis dieser Daten den Fahrpreise für die zurückgelegte Strecke ermittelt. Solche Systeme werden oft als "Be In/Be Out"-Systeme bezeichnet.

Aus der DE 199 57 660 ist ein Verfahren zur Abrechnung des Fahrpreises bei der Benutzung öffentlicher Verkehrsmittel bekannt, bei welchem ein vom Nutzer mitgeführter scheckkartenähnlicher Speicher mit einem Guthaben belegt ist. Während der Nutzung öffentlicher Verkehrsmittel werden von dem Verkehrsmittel

Zählimpulse ausgesandt und bei jedem empfangenen Zählimpuls von dem auf der Speichereinheit abgespeicherten Guthaben ein Betrag abgebucht. Aus diesem Grunde muß die Speichereinheit praktisch ununterbrochen aktiv sein, was den Energieverbrauch erheblich erhöht. Darüber hinaus ist die Anpassung an Tarifsysteme, Gruppensysteme und dergleichen praktisch nicht möglich. Schlußendlich ist noch vorgesehen, daß am Transportmittel eine Erkennungsvorrichtung ausgebildet ist, die Codierungen der einzelnen Fahrberechtigungsausweise erkennt und verwertet. Es findet also ein bidirektionaler Informationsaustausch statt.

Aus der Schweiz ist ein Pilotprojekt "easyride" bekannt, bei dem der Kunde eine Transponder-Karte bei sich führt, die beim Benutzen eines Transportmittels eine Anmeldung im Transportmittel vornimmt und dies regelmäßig wiederholt. Die Kommunikation zwischen dem Transportmittel und der Transponder-Karte ist dabei bidirektional und nimmt in der Komplexität zu, je mehr Fahrgäste sich im Transportmittel befinden. Dennoch war der Komfort für den Kunden bereits gut.

Solche Be-In/Be-Out Systeme sind bisher jedoch sehr teuer und technisch anfällig. Auch ist ein immer wieder auftretendes Problem der hohe Energiebedarf des Transpondermediums.

Check-In/Check-Out Systeme haben den Nachteil, daß sie für Massenanwendungen i.d.R. nicht geeignet sind: man stelle sich eine volle U-Bahn zur Hauptverkehrszeit vor, bei der jeder Fahrgast beim oder kurz vor dem Erreichen der Ziel-Haltestelle zunächst an ein Terminal in der U-Bahn herantreten muss, um einen Check-Out vorzunehmen. Dies ist faktisch nur in geschlossene Systeme mit Drehgittern an jeder Haltestelle praktisch wie beispielsweise der U-Bahn in London. Für offene Systeme wie in Deutschland üblich ist dies eher unpraktisch. Für Inhaber von Monatskarten erweist sich zudem der zusätzliche Aufwand für Check-In und Check-Out als Verschlechterung zum Fahrschein auf Papier.

Die vorliegende Erfindung zielt darauf ab, ein Verfahren zur automatisierten Erfassung der Benutzung kostenpflichtiger Transportmittel bereitzustellen, das einfach zu handhaben, kundenfreundlich, beständig gegen Betrugsversuche und flexibel bezüglich der Tariffestlegung ist.

Das erfindungsgemäße Verfahren ist durch die Merkmale im Patentanspruch 1 gekennzeichnet. Mindestens ein im Bereich des Transportmittels angeordneter Sender sendet im Sinne einer unidirektionalen Kommunikation Datentelegramme aus, die von einem Nutzerendgerät des das Transportmittel nutzenden Nutzers empfangen und weiterverarbeitet werden.

Der besondere Vorteil dieses Verfahrens liegt darin, daß die Kommunikation ausschließlich von dem im Bereich des Transportmittels angeordneten Sender in Richtung des Nutzerendgerätes erfolgt, also keine Signal- oder Datenübertragung vom Nutzerendgerät in Richtung des Senders stattfindet. Durch dieses sogenannte Broadcast-Verfahren werden Kollisionen vermieden, die auftreten können, wenn mehrere Nutzerendgeräte gleichzeitig Daten versenden. In diesem Fall müßten nämlich größere Frequenzbereiche reserviert werden, damit eine große Anzahl Nutzerendgeräte störungsfrei senden kann. Insbesondere an großen Verkehrsknotenpunkten ist dies nicht zu realisieren. Eine weitere Alternative wäre, ein Protokoll zu verwenden, mit dem die Aufsendungen der Nutzerendgeräte koordiniert werden. Eine solche Implementierung ist jedoch aufwendig und äußerst fehleranfällig. Außerdem benötigt dabei der im Bereich des Transportmittels angeordnete Sender eine Kommunikationsverbindung zu einer zentralen Rechnereinheit zur Weiterleitung der empfangenen Daten, was ebenfalls mit Aufwand und Kosten verbunden ist.

Ausgangspunkt ist, daß der Fahrgast eine elektronische Vorrichtung (Nutzerendgerät) hat, die über einen Speicher verfügt, der mit mindestens einem Empfänger und einer Verarbeitungseinheit verbunden ist. Vorteilhaft verfügt das Endgerät ferner über ein Display. Es wird dann ein Verfahren durchgeführt, bei dem die folgenden Schritte erfolgen:
- Aussenden von Datentelegrammen von einem im Bereich des Transportmittels angeordneten Sender,
- Einmaliges Empfangen und Speichern der vom Sender ausgesendeten Datentelegramme,
- Empfangen und Speichern weiterer vom Sender ausgesendeter Datentelegramme und
- Weiterverarbeitung der empfangenen Datentelegramme unter Berücksichtigung von auf dem Nutzerendgerät befindlichen oder in den Datentelegrammen enthaltenen Daten und Algorithmen,
wobei als Sender vorzugsweise einfach empfangbare Funksender (Transponder, WLAN, Bluetooth oder andere) mit begrenzter Sendereichweite verwendet werden. Die Sender sind dabei vorzugsweise gegen Störungen unempfindlich; dazu eignen sich insbesondere sog. Frequency-Hopping-Technologien, Spreizbandverfahren oder ähnliches. Ein Rücklesen des gesendeten Codes ermöglicht die kontinuierliche Funktionskontrolle im Transportmittel. Erfindungsgemäß prüft ein Rücklese-Empfänger die korrekte Aussendung der vom Sender gesendeten Datentelegramme, erkennt ggf. Kollisionen/Interferenzen und veranlaßt bei solchen Störungen einen Frequenz- bzw. Kanalwechsel, so daß die Datentelegramme auf einer anderen Frequenz oder auf einem anderen Kanal gesendet werden. Das System ist damit selbstorganisierend und funktioniert sowohl mit mehreren Sendern in einem Fahrzeug als auch mit mehreren Fahrzeugen, bei denen sich die Sendereichweiten der entsprechenden Sender überschneiden.

Das Nutzerendgerät, auf dem das elektronische Ticket oder E-Ticket gespeichert ist, empfängt also die vom Sender ausgesendeten Datentelegramme und verarbeitet diese weiter. Diese Weiterverarbeitung kann darauf beschränkt sein, die empfangenen Daten unverändert zu speichern.

Gemäß der Erfindung können im Nutzerendgerät nach Auswertung des empfangenen Datentelegramms Einheiten von einem vorbezahlten Guthaben abgebucht werden. Dieses Guthaben kann beispielsweise bei der Übernahme des Nutzerendgerätes oder zu jedem beliebigen Zeitpunkt an dafür vorgesehenen Stellen aufgeladen werden. Der zu zahlende Fahrpreis kann beispielsweise linear
entfernungsabhängig sein oder sich an einer beliebig anderen Tarifsystematik errechnen.

In einer Ausgestaltungsform enthält das Nutzerendgerät zeitlich und/oder räumlich begrenzte Gültigkeitsinformationen, die mit den im empfangenen Datentelegramm enthaltenen Daten verglichen werden. Somit läßt sich eine Zeitkarte realisieren, deren Gültigkeit gleichzeitig auf ein geographisch eingeschränktes Gebiet begrenzt sein kann. Das Ticket kann beispielsweise einen Tag, ein Wochenende, eine Woche, einen Monat oder sogar ein ganzes Jahr gültig sein. Auch beliebige andere Gültigkeitsdauern sind möglich, beispielsweise während Messen oder sonstiger Veranstaltungen oder Ereignisse. Weiterhin kann die Gültigkeit auf eine geographische Region wie beispielsweise eine Stadt oder eine Verkehrszone begrenzt sein. Auch eine Beschränkung auf bestimmte Verkehrsmittel ist möglich. Das Vorhandensein einer Gültigkeitsinformation, welche mit den vom Transportmittel empfangenen Daten in Übereinstimmung ist (Ticket paßt zur Fahrt) kann beispielsweise auf dem Display zwecks einfacher visueller Kontrolle zur Anzeige gebracht werden.

Gemäß einer weiteren Ausgestaltungsform werden die empfangenen Daten des Senders im Nutzerendgerät gespeichert und zeitversetzt ganz oder teilweise an eine zentrale Rechnereinheit übertragen, woraufhin in der zentralen Rechnereinheit der zu entrichtende Gesamtpreis ermittelt wird. Dabei können alle empfangenen Datenpakete an die Rechnereinheit übertragen werden. Es ist auch möglich, daß bereits im Nutzerendgerät weiterverarbeitete Datensätze, die beispielsweise den Fahrtanfang und das Fahrtende kennzeichnen, an die Rechnereinheit übertragen werden und insofern eine Vorverarbeitung im Nutzerendgerät stattfindet. Auch eine Kombination dieser Prinzipien ist möglich. In vorteilhafter Weise kann so auch die in Anspruch genommene Route in die Tarifermittlung einfließen. Das Vorgehen, die tatsächliche Nutzung im Nachhinein abzurechnen, eignet sich besonders für Dauerkunden, deren Daten dem Transportdienstleister bekannt sind. Es bietet sich beispielsweise an, eine Art Abschlag auf dem Nutzerendgerät zu speichern, der bei Nutzung sukzessive abgebaut wird. Ist eine gewisse Grenze erreicht, so verliert das auf dem Nutzerendgerät gespeicherte elektronische Ticket seine Gültigkeit, bis das Nutzerendgerät zur Übertragung der Daten kommunikationstechnisch mit einer zentralen Rechnereinheit verbunden wird, eine exakte Abrechnung erfolgt und ein erneuter Abschlag auf das Nutzerendgerät übertragen wird.

Selbstverständlich können auch weitere Abrechnungsmodi vorgesehen sein, beispielsweise die Verwendung von Einzel- oder Mehrfahrtentickets.

In vorteilhafter Weise zeigt das Nutzerendgerät an, welcher Abrechnungsmodus aktiv ist. Dies kann, zusammen mit der Ticketgültigkeit, vom Nutzer wie von einem Kontrolleur überprüft werden.

In vorteilhafter Weise enthalten die von dem im Transportmittel angeordneten Sender ausgesendeten Datentelegramme mindestens eine Information aus der Menge Firmen-ID, Sequenznummer, Datum, Uhrzeit, Standortinformation, Tarifinformationen und Transportmittelidentifikation bzw. Transportmittelkennung. Die Firmen-ID dient der Identifikation des die Transportleistung bereitstellenden Unternehmers. wodurch beispielsweise die Aufteilung von Einnahmen auf die verschiedenen Unternehmer in einem Verkehrsverbund ermöglicht wird. Anhand der Sequenznummer kann das Datentelegramm eindeutig identifiziert werden. Mit Hilfe von Datum und Uhrzeit kann der Zeitpunkt der Nutzung eines Transportmittels bestimmt werden. Die Standortinformation dient dazu, den räumlichen Verlauf der Beförderung nachzuvollziehen. Anhand der Transportmittelidentifikation kann festgestellt werden, welches Transportmittel benutzt wird. Selbstverständlich können die Datentelegramme auch weitere, hier nicht aufgeführte Informationen enthalten.

Diese Informationen bezieht der Sender in vorteilhafter Weise von einem ohnehin im Transportmittel vorhandenen Rechner, zum Beispiel einem RBL-Bordrechner oder einem IBIS-Steuergerät. Die Übertragung kann über einen IBIS-Wagen-Bus, Ethernet LAN oder sonstige Kanäle erfolgen.

Die vom Transportmittel gesendeten Daten (Code) sind dabei qualifiziert. Je nachdem, welche Art von Tarifmodell unterstützt werden soll, enthält der Code zumindest einen Zählerstand oder eine Ortsinformation. Aus der Veränderung/Fortschreibung des Codes kann die Verarbeitungseinheit (V) ermitteln, welche Strecken bei der Nutzung des Transportmittels zurückgelegt
wurden und welche Gebühren sich daraus für den Fahrgast ergeben. Steigt der Fahrgast beispielsweise an einer Haltestelle (A) ein, und steht ein Zähler des Transportmittels auf 100, kann dieser Zählerstand nunmehr regelmäßig vom Transportmittel ausgesendet werden, ohne daß dadurch die Verarbeitungseinheit die gespeicherten Wert- oder Geldeinheiten vermindert. Erst wenn das Transportmittel fährt, wird der Zähler des Transportmittels inkrementiert. So kann beispielsweise an der Haltestelle (B) der Zählerstand 103 betragen und an Haltestelle (C) entsprechend 110. Die Verarbeitungseinheit erhält vom Empfänger (E) jeweils die veränderten Codes, aus denen der Zählerstand ermittelt werden kann. Hat sich der Zählerstand verändert, können während der Fahrt entsprechende Wert- oder Geldeinheiten abgebucht und dem Fahrgast auf dem Display ein verbleibendes Kontingent oder Guthaben angezeigt werden.

Weit verbreitet sind jedoch auch Tarife, die einen festgelegten Preis für jede mögliche Wegstrecke von A nach B vorgeben und zwar oft in Abhängigkeit von Zonen, Waben oder anderen übergeordneten Verwaltungseinheiten. Bei solchen Tarifmodellen ist es mit dem erfindungsgemäßen Verfahren möglich, Informationen über die aktuelle Haltestelle und gegebenenfalls die aktuelle Zone, Wabe etc. zu senden. Nun kann das Nutzerendgerät selbständig z.B. anhand von Tabellen oder Algorithmen errechnen, welcher Fahrpreis für die bisher zurückgelegte Strecke zu entrichten ist. Diese können beispielsweise im Nutzerendgerät gespeichert sein oder in einer besonders vorteilhaften Ausführung der Erfindung ebenfalls im gesendeten Code enthalten sein, was nachfolgend noch näher erläutert wird. Die letztgenannte Variante könnte beispielsweise an jeder Haltestelle die bis dahin angefallenen Preise bzw. Preisstufen für alle möglichen Einstiegshaltestellen senden, wovon das Nutzerendgerät nur die für seine Einstiegshaltestelle gültige Information auswertet. Abbuchungen des Fahrpreises können dabei jeweils an jeder Haltestelle vorgenommen werden, und zwar als Differenzabbuchung zur Abbuchung an der vorhergehenden Haltestelle. Fährt ein Fahrgast beispielsweise 5 Haltestellen, so ist es denkbar, ihm beim Erreichen der ersten Haltestelle den Preis für eine "Kurzstrecke" abzubuchen und im weiteren Fahrtverlauf erst beim Erreichen der 4. Haltestelle zusätzlich die Differenz zwischen einer "Kurzstrecke" und einer "Einzelfahrt" abzubuchen.

Ein besonderes Problem ergibt sich aus Tarifregelungen wie beispielsweise beim Rhein-Main-Verkehrsverbund oder dem Verkehrsverbund Rhein-Ruhr üblich, daß ein Ticket "nur zu Fahrten in Richtung auf das Ziel" genutzt werden darf. Bei papierbasierten Fahrscheinen ist der Fahrgast dafür verantwortlich, für die Rückfahrt einen neuen Fahrschein zu kaufen. Ein automatisiertes Fahrscheinsystem muss dies zuverlässig automatisch erledigen. An einem konkreten Beispiel wird das Problem deutlich:
Fährt man im Rhein-Main-Gebiet von Niedernhausen nach Königstein, so muss man zunächst mit einem Zug nach Höchst fahren, dort umsteigen und mit einem Zug in fast entgegengesetzter Richtung nach Niedernhausen weiterfahren. Rein geographisch legt man damit eine Strecke eines spitzen Dreiecks zurück: der Fahrgast fährt also einen ziemlich großen Umweg zu seinem Ziel und nähert sich dann bereits wieder dem Einstiegsbahnhof, Tariflich handelt es sich aber noch um eine Richtung.

Die Erfindung kann dieses Problem lösen. Dazu werden an jeder Haltestelle Informationen über zulässige "Fahrtrichtungen" in den Code eingefügt, sogenannte Fahrtfortsetzungsregeln. Beim Einstieg speichert das Nutzerendgerät also die Einstiegshaltestelle und beim Erreichen der nächsten Haltestelle kann nun zusätzlich die Fahrtrichtung festgelegt werden, die nun für die gesamte weitere Fahrt gilt. An jeder Haltestelle sendet das Transportmittel zu jeder möglichen Einstiegshaltestelle Informationen, ob die Fahrt in der gefahrenen Richtung fortgesetzt werden darf, oder ob ein neuer Fahrschein für die Weiterfahrt benötigt wird. Sobald ein Fahrgast nun eine Haltestelle erreicht, deren Fahrtfortsetzungsinformationen eine Weiterfahrt in der gewünschten Richtung verbieten, kann das aktuelle Ticket abgeschlossen und gebucht werden, woraufhin ein neues Ticket mit der aktuellen Haltestelle als neue Einstiegshaltestelle errechnet wird.

Codes können dabei in Abhängigkeit von allen denkbaren preisrelevanten Parametern gebildet werden, wie der zurückgelegten Fahrtstrecke, Datum und Uhrzeit um etwa Haupt- und Nebenzeiten zu unterscheiden, Art des Transportmittels um etwa unterschiedliche Preise für Busse, Bahnen und Taxis zu
ermöglichen, befahrene Zonen, Fahrtrichtung, Wetter, Pünktlichkeit des Transportmittels um nur einige zu nennen.

Sinnvollerweise enthält der vom im Transportmittel angeordneten Sender gesendete Code auch einen oder mehrere weitere Informationen. wie zum Beispiel:
- eine Kennung des Betreibers um Sicherzustellen, daß die Wert- oder Geldeinheiten auch für den Betreiber Gültigkeit haben;
- eine Kennung des Transportmittels, um sicherzustellen, daß bei einem Transportmittelwechsel die Zählerstände auseinander gehalten werden können und damit eine korrekte Abbuchung von Wert- oder Geldeinheiten gewährleistet wird;
- Ein Gruppenkennzeichen und/oder Preisangaben, um beispielsweise unterschiedliche Tarifinformationen für Kinder und Erwachsene zu senden und damit für Kinder niedrigere Preise zu ermöglichen;
- Ein Prüfmerkmal für Fahrscheinkontrollen, beispielsweise eine Prüfzahl oder eine Kombination von Symbolen. Dieses Prüfmerkmal kann beispielsweise nur im Falle einer Fahrscheinkontrolle im Code enthalten sein und dann auf dem Display angezeigt werden. Damit wird dem Kontrolleur eine einfache Sichtkontrolle der Fahrscheine ermöglicht. Die Anzeige des Prüfmerkmals kann in einer besonders sicheren Ausführung des Verfahrens auch daran gebunden werden, daß zuvor mindestens ein bis auf den enthaltenen Zählerstand identischer Code ohne Prüfmerkmal empfangen wurde. Damit sind Fahrgäste, die bewusst den Empfang der Codes unterdrücken, ebenfalls leicht erkennbar, da das Display dann kein Prüfmerkmal anzeigt;
- eine Uhrzeit mit oder ohne Datum, um Missbrauch dadurch auszuschließen, daß nur solche Codes verarbeitet werden, die eine aktuelle Zeit haben. So kann vermieden werden, daß Codes aufgezeichnet und erneut gesendet werden können. Zum Vergleich der Uhrzeit kann die Verarbeitungseinheit eine
   Zeitmessung vornehmen, die sich über die im Code enthaltenen Zeitangaben fortschreibt;
- statt oder zusätzlich zu einer Uhrzeit kann auch eine laufende Nummer enthalten sein, die ebenfalls ermöglicht, bereits empfangene Codes mit niedrigeren Nummern von der Verarbeitung auszuschließen; und
- Werteinheiten, mit denen ein Speicher aufgebucht werden kann.

Das Verfahren ist dann besonders einfach umzusetzen, wenn die Aussendung der Codes zu festgelegten Zeiten, zum Beispiel alle 10 Sekunden, erfolgt. Dadurch können die Empfänger besonders energiesparend ausgelegt werden, da sie in der Zwischenzeit abgeschaltet werden können. Beispielsweise kann zusammen mit dem vom Sender ausgesendeten Code ein Synchronisationssignal zusammen mit einer Inhaltsangabe gesendet werden. Das Synchronisationssignal synchronisiert die Nutzerendgeräte in zeitlicher Hinsicht mit dem Sender. Die Inhaltsangabe enthält zeitliche Angaben darüber, zu welchen Zeitpunkten im Einzelnen Signale vom Sender ausgesendet werden. Entsprechend können sich die Nutzerendgeräte jeweils kurz vor Aussendung eines Signals einschalten, um dieses zu empfangen, und unmittelbar nach dem Empfang eines Signals wieder ausschalten. Dazu ist es allerdings erforderlich, daß die physikalische Datenübertragung die Möglichkeit besitzt, synchron zu übertragen. Kollisionserkennungen. wie beispielsweise CSMA-CA (Carrier Sense Multiple Access with Collision Avoidance), die eine Verzögerung der Signalaussendung bewirken können, sollten entsprechend deaktiviert werden.

Ein besonderer Aspekt der Erfindung betrifft die Aussendung der Datentelegramme, die von bestimmten Ereignissen ausgelöst wird.

Gemäß der Erfindung finden die Ereignisse in einem festen zeitlichen Abstand statt. Dadurch wird sichergestellt, daß das Nutzerendgerät regelmäßig Datentelegramme empfängt.

Gemäß einer Ausgestaltungsform finden die Ereignisse nach einer durch das Transportmittel zurückgelegten Strecke statt. Somit läßt sich die Benutzung des Transportmittels mit einer vorgebbaren örtlichen Genauigkeit erfassen.

Weiterhin ist es möglich, daß die Ereignisse stattfinden, wenn sich das Transportmittel im Bereich einer Haltestelle befindet. Somit läßt sich die Aussendung von Datentelegrammen auf ein Minimum reduzieren, da die Haltestellen diskrete Streckenabschnitte definieren, die eine kleinstmögliche Nutzungseinheit darstellen. Wird kein weiteres Datentelegramm empfangen, so ist davon auszugehen, daß der Nutzer das Transportmittel an der dem letzten empfangenen Datentelegramm zugehörigen Haltestelle verlassen hat. Zur genaueren Unterteilung kann vorgesehen sein, daß ein Datentelegramm bei Einfahrt in eine Haltestelle und ein Datentelegramm bei Ausfahrt aus der Haltestelle gesendet wird. Dadurch wird sichergestellt, daß das Nutzerendgerät des Nutzers an jeder Haltestelle mindestens ein Datentelegramm empfängt.

Gemäß einer weiteren Ausgestaltungsform finden die Ereignisse nach einem Zonen- und/oder Wabenwechsel statt. Ein solcher Wechsel kann für die Tarifermittlung und somit für die Gültigkeit des Tickets von Bedeutung sein, weshalb sich bei diesem Ereignis die Aussendung eines Datentelegramms anbietet.

Die von einem vorbestimmten Ereignis ausgelöste Aussendung solcher Datentelegramme kann dabei auch beispielsweise zum nächsten vorbestimmten Zeitpunkt nach dem Stattfinden des vorbestimmten Ereignisses erfolgen. Damit kann die Anzahl der gesendeten Datentelegramme an Ereignisse geknüpft werden, wobei gleichzeitig ein energiesparender Betrieb des Nutzerendgerätes sichergestellt wird.

Selbstverständlich ist es möglich, daß mehrere dieser Ereignisse die Aussendung eines Datentelegramms auslösen. Nicht nur in diesem Fall bietet es sich an, die Art des auslösenden Ereignisses im Datentelegramm zu vermerken.

In einer vorteilhaften Ausgestaltung der vorliegenden Erfindung generiert das Nutzerendgerät aus den empfangenen Datentelegrammen Datensätze über zurückgelegte Fahrten und speichert diese. So kann zur Abrechnung oder Analyse des Nutzungsverhaltens festgestellt werden, wann und wo ein Nutzer in ein Transportmittel zugestiegen ist oder dieses verlassen hat. Anhand dieser Daten
lassen sich auch durch Umsteigen unterbrochene Fahrten als zusammengehörig erkennen.

Grundsätzlich können die Tarifinformationen auch auf dem Speicher des Nutzerendgerätes hinterlegt sein.

Das Verfahren zur automatisierten Erfassung der Benutzung kostenpflichtiger Transportmittel beruht darauf, daß der Nutzer sein Nutzerendgerät während der gesamten Fahrtdauer eingeschaltet hat. Um zu verhindern, daß das Nutzerendgerät erst dann eingeschaltet wird, wenn eine Fahrkartenkontrolle durchgeführt wird, kann von dem im Transportmittel angeordneten Sender ein Datentelegramm ausgesendet werden, das das Nutzerendgerät in einen Kontrollmodus versetzt. Dieser Modus wird vom Nutzerendgerät angezeigt und kann nicht angenommen werden, wenn das Nutzerendgerät nach der Aussendung des entsprechenden Datentelegramms eingeschaltet wurde.

Gemäß einer vorteilhaften Ausgestaltung der vorliegenden Erfindung kann das Nutzerendgerät durch den Kunden bewusst ausgeschaltet werden. So kann zum Beispiel ein Kunde mehrere Nutzerendgeräte gleichzeitig mitführen, ohne daß auf allen eine Abrechnung erfolgt wenn diese ausgeschaltet sind. Dies kann zum Beispiel der Fall sein, wenn ein Vater die Nutzerendgeräte seiner Kinder mitführt, obwohl die Kinder nicht mit dem Vater unterwegs sind.

Selbstverständlich können auch andere Kontrollmechanismen, die durch die Aussendung eines speziellen Datentelegramms initiiert werden, verwendet werden, ohne den Grundgedanken dieser Erfindung zu verlassen.

Denkbare Empfänger bringen ein weiteres praktisches Problem mit sich: Sendet das Transportmittel keine Information, kann dies vom Empfänger zunächst nicht erkannt werden, da die Empfänger dann willkürliche Informationen erkennen (Rauschen des Empfängers). Diese Eigenschaft zieht üblicherweise einen hohen Energiebedarf des Empfängers nach sich, da eine klassische Trägererkennung bei diesen Empfängern nicht möglich ist und die Empfänger deshalb kontinuierlich eingeschaltet bleiben müssen. Um weiterhin den Energiebedarf im Nutzerendgerät zu reduzieren, kann die Aussendung des Codes daher sehr redundant erfolgen.

Werden die Codes nach einem festen Schema codiert, z.B. jedes Bit wird n-mal wiederholt, so kann ein Empfänger im Bruchteil einer Sekunde erkennen, ob das Signal vom Sender stammt, oder ob es sich um Rauschen handelt, wenn sich nämlich das Rausch-Signal schneller als nach "n" gleichen Elementen verändert. Dann kann der Empfänger sofort abgeschaltet werden und erst nach einer festgelegten Zeit (Ruhezeit) wieder eingeschaltet werden. Dieses Verfahren ist dann besonders effektiv, wenn die Dauer der Übermittlung des Codes länger ist als die Ruhezeit des Empfängers.

Um das Verfahren besonders robust auszugestalten, kann ein empfangener Code erst dann als gültig ausgewertet werden, wenn bestimmte Merkmale des Codes (z.B. die aktuelle Haltestelle) über einen längeren Streckenabschnitt mehrmals empfangen wurde. Damit werden mögliche Störungen durch Funksignale von entgegenkommenden Transportmitteln vermieden.

In einer bevorzugten Ausführung des Verfahrens, werden die Wert- oder Geldeinheiten nur abgebucht, wenn die Veränderung des Zählerstands einen festgelegten Schwellwert überschreitet. Damit kann sichergestellt werden, daß nicht etwa Codes empfangen werden, die von einem vorbeifahrenden Transportmittel stammen, welches der Fahrgast gar nicht benutzt. In diesem Falle empfängt er zwar einen oder mehrere Codes, die enthaltenen Zähler haben sich aber aufgrund der geringen zurückgelegten Entfernung des Transportmittels kaum verändert und können somit ignoriert werden.

Besonders manipulationssicher ist das Verfahren, wenn der Code mit einem aus dem Stand der Technik bekanntem asymmetrischen Verschlüsselungsverfahren verschlüsselt oder signiert wird, wobei der private Schlüssel zur Verschlüsselung oder zur Erstellung einer elektronischen Signatur des Codes und der öffentliche Schlüssel zum Entschlüsseln des Codes genutzt wird. Damit wird sichergestellt, daß nur autorisierte Stellen die preisrelevanten Codes bilden. Entsprechende Sicherheit kann auch unter Verwendung von symmetrischen Verschlüsselungsverfahren erzeugt werden. In diesem Falle werden die Schlüssel auf dem Nutzerendgerät geeignet sicher abgelegt.

Für Abonnenten ist weiterhin eine besonders vorteilhafte Ausführung des Verfahrens denkbar, bei dem vor einem Abbuchen von Geld-/oder Werteinheiten geprüft wird, ob die zurückgelegte Strecke in einer im Nutzerendgerät enthalten Liste aufgeführt ist und sofern Sie als im Abonnement enthalten erkennbar ist, nicht berechnet wird. So können Vielfahrer bestimmte Strecken pauschal, etwa monatlich bezahlen und nur noch die Gelegenheits-Fahrten über die im Nutzerendgerät enthaltenen Geld- oder Werteinheiten abrechnen.

Das Basisverfahren geht davon aus, daß ein transportmitteleigener Sender gemäß einer vorgegebenen Regel Signale aussendet. Ein nutzerseitiges Nutzerendgerät enthält einen Empfänger, einen Speicher, eine Prozessoreinheit und ggf. ein Display. Das Nutzerendgerät ist möglichst klein und robust gebaut und kann von jedem Nutzer mitgeführt werden. Befindet sich ein Nutzer innerhalb des Transportmittels und damit im Bereich des transportmittelseitigen Senders, empfängt das Nutzerendgerät die vom Transportmittelsender gesandten Datentelegramme. Auf dem Speicher des Nutzerendgerätes ist bevorzugt ein einen Geldwert oder eine Punktekarte oder dergleichen repräsentierender Wert gespeichert. Dieser kann als Guthaben auf dem Display angezeigt werden. In Abhängigkeit von dem jeweiligen Verfahren und der gesamten Codes kann nunmehr von dem gespeicherten Wert tarifrelevant abgebucht werden. Das Basissystem könnte somit im einfachsten theoretischen Fall so funktionieren, daß das Transportmittel an jeder Haltestelle ein Datentelegramm aussendet und das Nutzerendgerät basierend auf zumindest zwei Datentelegrammen einen Wert abbucht.

In dem Nutzerendgerät können darüber hinaus Spezialinformationen hinterlegt sein, wie beispielsweise Sondertarifwerte für Kinder, Senioren und dergleichen, Transportbereichangaben, Streckenangaben oder beispielsweise Zeitangaben wie Monatskarten und dergleichen.

Grundsätzlich können Tarifinformationen und Preise vollständig auf dem Speicher des Nutzerendgerätes gespeichert sein und berücksichtigt werden, oder, für den Fall, daß dies zu viele Informationen umfaßt, auch vom Sender im Code übermittelt
werden. Sind die Tarifinformationen und Preise vollständig auf dem Nutzerendgerät gespeichert, so reicht es beispielsweise aus, daß der im Transportmittel angeordnete Sender Positionsdaten sendet, um den Fahrpreis im Nutzerendgerät zu ermitteln. Es müssen also nur wenig Informationen an das Nutzerendgerät übermittelt werden. Nachteilig hieran ist, daß die Tarifinformationen und Preise nur mit relativ großem Aufwand geändert werden können. Auch ist es für einen Wechsel des Verkehrsverbunds erforderlich, daß auf dem Nutzerendgerät die Tarifinformationen und Preise verschiedener Verkehrsverbünde hinterlegt sind.

Alternativ können die Tarifinformationen auf den Nutzerendgeräten gespeichert sein, während die Preise und die Positionsdaten von den Sendern übermittelt werden. Auf diese Weise ist zumindest eine Preisänderung relativ einfach durchführbar.

Gemäß einer weiteren Alternative wird ein Betriebssystem auf jedem Nutzerendgerät gespeichert, während die Tarifinformationen, die Preise und die Positionsdaten von den Sendern ausgesendet werden, die dann von den Nutzerendgeräten zur Ermittlung des Fahrpreises interpretiert werden, wodurch die Fahrpreisermittlung sehr flexibel gestaltet wird.

Natürlich können über die Positionsdaten hinaus auch weitere Informationen gesendet werden, wie beispielsweise die Firmen-ID, Datum, Uhrzeit etc.

Die Tarifinformationen können beispielsweise Angaben über die für eine Fahrt benötigten Fahrscheine, die für ein Fahrt benötigen Zuschläge, verschiedene Berechtigungen, Anrechenbarkeitsregeln von Fahrscheinen untereinander (Kurzstrecke, Einzelfahrt, Langstrecke, etc.), Fahrfortsetzungsregeln oder dergleichen enthalten. Auch können die Tarifinformationen vorbestimmte Fahrkarten definieren, wie beispielsweise eine Monatskarte, inklusive der örtlichen und zeitlichen Gültigkeitskriterien, um es den Nutzerendgeräten beispielsweise zu ermöglichen, allein anhand von Positionsdaten, die von den Sendern übermittelt werden, die Gültigkeit der Fahrkarte prüfen zu können.

Um auf einfachste Weise flexibel zu sein, kann das Nutzerendgerät über eine zusätzliche Schnittstelle, beispielsweise eine Infrarotschnittstelle, verfügen und spezielle Informationen oder Modi abrufen. So kann beispielsweise ein einfaches Senderfeld im Transportmittel verwendet werden, um einen Mehrpersonenmodus im Nutzerendgerät zu aktivieren, beispielsweise doppelte, dreifache oder mehrfache Abbuchungen oder dergleichen. Hier genügt ein einfaches Anhalten an ein entsprechend gekennzeichnetes Senderdisplay, um per Infrarot die Informationen zu erlangen.

Die Tarifinformationen können senderseitig so aufbereitet sein, daß für die aktuelle Haltestelle jeweils der zu entrichtende Fahrpreis in Bezug auf eine beliebige Einstiegshaltestelle, Einstiegszone oder dergleichen festgelegt und übermittelt wird. Das jeweilige Nutzerendgerät kann dann auf einfache Weise den gültigen Tarif entnehmen und abbuchen.

Zum Aufladen wird das Nutzerendgerät an sogenannte Ladeterminals geführt. Beispielsweise kann über die Infrarotschnittstelle eine Identifikation erfolgen, aber auch über andere Schnittstellen berührungslos oder kontaktierend. Eine bar oder per Karte geleistete Einzahlung kann dann ebenfalls über Infrarot, Funk, USB oder dergleichen auf das Nutzerendgerät als Guthaben übermittelt werden. Dabei können Identifikationsverfahren und kryptografische Verfahren eingesetzt werden.

Die Ladeterminals sind vorzugsweise online mit Ladeservem verbunden, so daß die Ladeterminals selbst keinerlei Informationen bereithalten, die beliebige Dritte beispielsweise ermitteln könnten. Alternativ können Ladeterminals auch Ladevorgänge offline vornehmen und dabei eine Betragsobergrenze berücksichtigen. Bei dieser Funktionsweise verringert sich die Betragsobergrenze (Limit) mit jedem Buchungsvorgang und wird erst dann wieder erhöht, wenn der Ladevorgang von einem Ladeserver genehmigt wurde.

Besonders flexibel wird das Nutzerendgerät, wenn es wie ausgeführt zusätzlich mit einem Infrarot-Empfänger ausgestattet ist. Über diesen Empfänger können sehr leicht spezielle Codes an das Nutzerendgerät gesendet werden, um Einstellungen im Speicher zu verändern. Beispielsweise ist es möglich, im Transportmittel mehrere Felder mit jeweils einer einfachen Infrarot-Sendereinheit vorzusehen, die kennzeichnet, mit wie viel Personen der Fahrgast gemeinsam reist. Ein Infrarot-Sender sendet kontinuierlich eine "1", ein zweiter Infrarot-Sender sendet kontinuierlich eine "2" usw. Durch einfaches "zeigen" auf ein Personen-Symbol kann der Fahrgast nun seinem Nutzerendgerät mitteilen, daß die nachfolgende Fahrt für die entsprechende Anzahl Personen abgebucht werden soll. Statt eines Infrarot-Empfängers sind auch andere einfache Empfangsvorrichtungen denkbar z.B. ein Kontakt, eine weitere Funkschnittstelle, Ultraschallsensoren, ein Fotosensor u.a..

Für den Einsatz in Taxis oder in anderen Transportmitteln, bei denen der Fahrpreis sehr genau dem einzelnen Betreiber zugeordnet werden muss, kann vorgesehen sein, daß das Nutzerendgerät unmittelbar mit dem Abbuchen auch jeweils ausgelesen wird und die ausgelesenen Informationen an ein Abrechnungssystem übergeben werden.

Es kann vorgesehen sein, daß die im Nutzerendgerät gespeicherten Daten in zeitlichen Abständen gesammelt an eine zentrale Rechnereinheit übertragen werden. Dies kann beispielsweise erfolgen, wenn der Nutzer eine bestimmte Zone erreicht, beispielsweise den Zugang zu einer Haltestelle, oder wenn der Nutzer zu Abrechnungszwecken eine Verbindung zwischen seinem Nutzerendgerät und einer Rechnereinheit des Transportdienstleisters herstellt.

Generell ist das Auslesen der in den Speichern vorgehaltenen Transaktionsdaten auf verschiedenen Wegen möglich: Beim Wiederaufladen der Nutzerendgeräte mit neuen Werteinheiten oder über das Internet oder aber auch regelmäßig automatisch während der Fahrt an einem Datenspeicher im Fahrzeug.

Wirtschaftlich ist das Verfahren insbesondere dann, wenn die abzubuchenden Werteinheiten vorn Fahrgast gegen Zahlung entsprechender Beträge auch wieder aufgeladen werden können. Das erfindungsgemäße Verfahren sieht dabei vor, daß ein Hintergrundsystem die Zahlung erfasst und dann an das Nutzerendgerät neue Werteinheiten übermittelt. Der Zahlvorgang des Fahrgastes kann bar an einer
Verkaufsstelle oder bargeldlos über Automaten, ein Call-Center oder das Internet erfolgen. Die für das Nutzerendgerät erzeugten Werteinheiten können beispielsweise mit Hilfe von Ladeterminals an das Nutzerendgerät übermittelt werden. Denkbar ist auch, die ausgesendeten Codes des Transportmittels mit den für die Nutzerendgeräte vorgesehenen Werteinheiten zu versehen. Dazu ist es nötig, daß die Werteinheiten jeweils für ein Nutzerendgerät Gültigkeit besitzen und in jedem Transportmittel ausgesendet werden.

In vorteilhafter Weise zeigt das Nutzerendgerät den aktuellen Status, beispielsweise den Ticket- oder Berechtigungsstatus, an. Dadurch kann sowohl der Nutzer als auch ein Kontrolleur durch einfache Sichtung des Nutzerendgerätes feststellen, ob es sich um einen gültigen Fahrausweis handelt und der Nutzer über die Berechtigung zur Benutzung des Transportmittels verfügt.

Mit der Übergabe des Nutzerendgerätes an den Nutzer wird dieses initialisiert, beispielsweise durch Aufspielen von Ticketinformationen. Besteigt der Nutzer mit eingeschaltetem Nutzerendgerät ein Transportmittel, so empfängt das Nutzerendgerät ein erstes Datentelegramm, aus dem ein Datensatz über den Fahrtanfang generiert und gespeichert wird. Dieser Datensatz enthält neben dem Datum und der Uhrzeit auch die Identifikation des Transportmittels, so daß sowohl der Zeitpunkt als auch die in Anspruch genommene Transportleistung eindeutig identifiziert werden können. Während der Fahrt empfängt das Nutzerendgerät weitere Datentelegramme, bis daß der Nutzer den vom im Transportmittel angeordneten Sender abgedeckten Bereich verläßt und keine weiteren Datentelegramme mehr empfangen werden. Aus dem letzten empfangenen Datentelegramm generiert das Nutzerendgerät analog zu dem Vorgang bei Fahrtanfang einen Datensatz über das Fahrtende, der Datum, Uhrzeit sowie die Transportmittelidentifikation enthält. Während der Fahrtdauer zeigt das Nutzerendgerät an, ob das darauf gespeicherte Ticket gültig ist. Sobald das Nutzerendgerät bei nächster Gelegenheit in kommunikationstechnischem Kontakt mit einer Rechnereinheit des Transportdienstleisters steht, werden die gespeicherten Daten an diese Rechnereinheit übertragen, beispielsweise um eine Analyse des Nutzungsverhaltens durchzuführen, zu kontrollieren und das Vertrauen des Kunden in das System zu verbessern.

Aus Sicherheitsgründen werden bevorzugt sämtliche Daten, die bei der Durchführung des erfindungsgemäßen Verfahrens verarbeitet werden, signiert. So legt zum Beispiel der Verkehrsverbund in einer möglichen Rolle als Produktverantwortlicher die Tarife sowie die möglichen Fahrscheinarten fest und signiert diese, so daß sie nicht mehr verändert werden können. Auch die von den innerhalb der Transportmittel angeordneten Sendern ausgesendeten Informationen werden bevorzugt zumindest teilweise signiert, um eine Manipulation dieser Informationen auszuschließen. Die Nutzerendgeräte, die diese signierten Informationen empfangen, überprüfen die Signatur und signieren ebenfalls den Empfang, um einen belastbaren Nachweis der erbrachten Fahrleistung zu sichern. Schließlich werden auch Aufladevorgänge beim Aufladen eines Nutzerendgeräts mit einem Guthaben vorn jeweils Verantwortlichen (beispielsweise durch zugelassene Ladeterminals) signiert, wobei das aufgeladene Guthaben bevorzugt erst durch die Signatur seine Gültigkeit erhält.

Weitere Vorteile und Merkmale der Erfindung ergeben sich aus der folgenden Beschreibung anhand der Figuren. Dabei zeigen:
Fig. 1 eine schematische Darstellung zur Erläuterung des Verfahrens;
Fig. 2 eine Darstellung eines Ausführungsbeispiels für ein Nutzerendgerät und
Fig. 3 eine schematische Darstellung zur Erläuterung des Verfahrens des Aufladens des Nutzerendgerätes.

In den Figuren sind gleiche Elemente mit gleichen Bezugszeichen versehen.

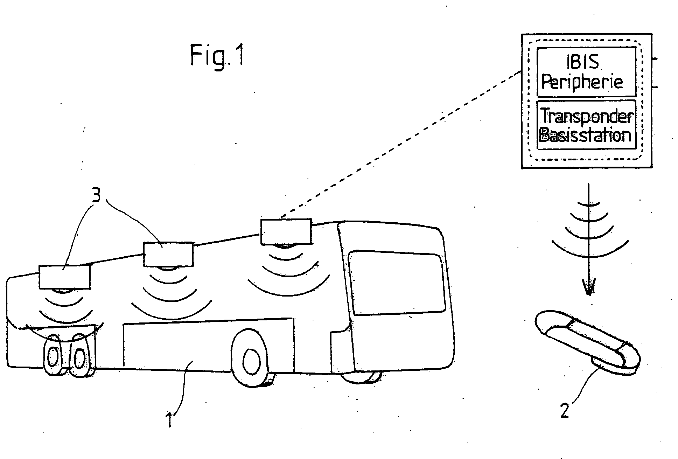

Gemäß Fig. 1 ist ein Bus 1 stellvertretend für öffentliche Verkehrsmittel wie Bahnen, Taxis und dergleichen gezeigt. Ein Nutzer mit einem Nutzerendgerät 2 befindet sich innerhalb des Busses 1. Die Sender 3 senden verfahrensabhängig, also zeitlich, distanzweise oder nach sonstigen Vorgaben Datentelegramme aus. Details eines Senders mit IBIS Peripherie, Transponderbasisstation sowie entsprechenden Schnittstellen sind in dem Vergrößerungskasten gezeigt. Vom Nutzerendgerät 2 werden die Datentelegramme aufgenommen und die in diesen enthaltenen Daten bzw. Informationen verarbeitet.

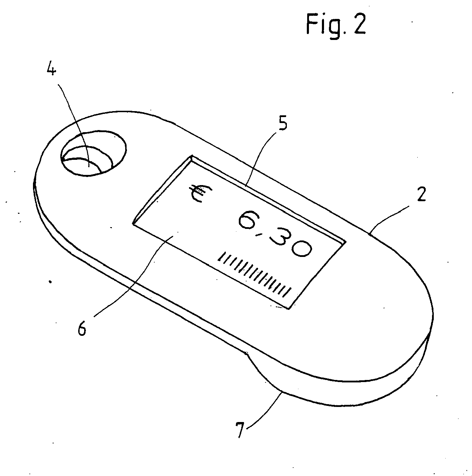

Gemäß Fig. 2 ist das Nutzerendgerät 2 aus einem ein- oder mehrteiligen Gehäuse gebildet, wobei im gezeigten Ausführungsbeispiel ein Loch 4 gezeigt ist. Damit kann das beispielsweise als elektronisches Ticket bezeichnete Nutzerendgerät an einem Schlüsselbund oder einem vergleichbaren Halteelement getragen werden. In dem Gehäuse ist ein Display 5 angeordnet, welches Betrags- oder sonstige Wertinformationen anzeigen. kann. Im Bereich der unteren Zeile 6 können Zusatzinformationen angezeigt werden, beispielsweise wenn eine Fahrt für mehrere Personen über dieses Ticket abgebucht wird, Haltestelleninformationen und dergleichen. Wie beschrieben ist in dem Nutzerendgerät 2 ein Prozessor, ein Speicher sowie im wesentlichen ein Empfänger, wobei der Verbreiterungsbereich 7 an einem Ende zur Aufnahme von Bauelementen dient.

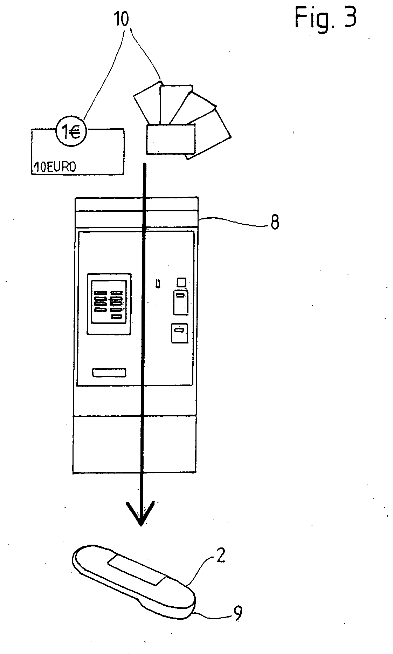

Gemäß Fig. 3 kann beispielsweise in diesem Bereich 7 ein Infrarotempfänger 9 angeordnet sein. An entsprechenden Stellen aufgestellte Ladeterminals 8 dienen dem Zweck, zunächst eine Identifizierungsprozedur mit dem Nutzerendgerät 2 durchzuführen. Anschließend kann der Nutzer Geldmittel 10 wie Bargeld, Scheckkarten und dergleichen einführen. Nach einem entsprechenden Protokoll oder auch unter Nutzung unterschiedlicher Schnittstellen kann dann das Terminal 8 auf das Nutzerendgerät 2 entsprechende Guthabenwerte übermitteln.

### Bezugszeichenliste

- 1: Bus
- 2: Nutzerendgerät
- 3: Sender
- 4: Loch
- 5: Display
- 6: Displaybereich
- 7: Verbreiterung
- 8: Ladeterminal
- 9: IR-Schnittstelle
- 10: Geldmittel

## Patentansprüche

1. Verfahren zur automatischen Erfassung der Benutzung kostenpflichtiger Transportmittel zur Personenbeförderung mittels eines Nutzerendgerätes eines das Transportmittel nutzenden Nutzers, wobei mindestens ein im Bereich des Transportmittel angeordneter Sender Datentelegramme sendet,
**dadurch gekennzeichnet,**
**dass** der Sender in zeitlich festgelegten Abständen und/oder in Abhängigkeit vom Ort des Transportmittels die Datendiagramme unidirektional aussendet wobei die Datentelegramme von dem Nutzerendgerät empfangen werden, wobei die folgenden Schritte durchlaufen werden
• Empfangen und Speichern eines von einem Sender gesendeten Datentelegramms, welches eine Standortinformation über den Standort des Senders und/oder Fahrpreis- oder Tarifinformationen enthält,
• Empfangen und Speichern mindestens eines weiteren von einem Sender gesendeten Datentelegramms,
• Weiterverarbeitung der empfangenen Daten unter Berücksichtigung von auf dem Nutzerendgerät befindlichen Daten und Algorithmen
**dadurch gekennzeichnet, dass**
ein im Transportmittel angeordneter Rücklese-Empfänger die korrekte Aussendung der vom Sender unidirektional gesendeten Datentelegramme prüft und bei Erkennung von Kollisionen und/oder Interferenzen einen Frequenz- bzw. Kanalwechsel veranlasst, so dass die Datentelegramme auf einer anderen Frequenz oder auf einem anderen Kanal gesendet werden.

2. Verfahren nach Anspruch 1, **dadurch gekennzeichnet, dass** die Datentelegramme mindestens eine Information aus der Menge Firmen-ID, Sequenznummer, Datum, Uhrzeit, Standortinformation, Tarifinformationen oder Transportmittelidentifikation enthalten.

3. Verfahren nach einem der vorangegangenen Ansprüche, **dadurch gekennzeichnet, dass** mindestens ein Datentelegramm mit einer elektronischen Signatur versehen ist, wobei das Nutzerendgerät diese Signatur überprüft.

4. Verfahren nach einem der vorangegangenen Ansprüche, **dadurch gekennzeichnet, dass** das Nutzerendgerät aus den empfangenen Datentelegrammen Datensätze über zurückgelegte Fahrten generiert und speichert.

5. Verfahren nach einem der vorangegangenen Ansprüche, **dadurch gekennzeichnet, dass** zurückgelegte Fahrten in Abhängigkeit von Tarifbestimmungen in Form einzelner Datensätze für jeweils abrechnungsrelevante Teilstrecken gespeichert werden.

6. Verfahren nach einem der vorangegangenen Ansprüche, **dadurch gekennzeichnet, dass** die gespeicherten Daten in zeitlichen Abständen gesammelt an eine zentrale Rechnereinheit übertragen werden.

7. Verfahren nach Anspruch 7, **dadurch gekennzeichnet, dass** an eine zentrale Rechnereinheit übertragene Daten vom Nutzerendgerät mit einer elektronischen Signatur versehen sind.

8. Verfahren nach einem der vorangegangenen Ansprüche, **dadurch gekennzeichnet, dass** für zurückgelegte Fahrten Preise in Abhängigkeit von Tarifinformationen ermittelt und einem Abrechnungskonto zugebucht werden.

9. Verfahren nach Anspruch 8, **dadurch gekennzeichnet, dass** für die Fahrpreisermittlung benötigte Tarifinformationen vom Sender gesendet werden.

10. Verfahren nach einem der vorangegangenen Ansprüche, **dadurch gekennzeichnet, dass** das Nutzerendgerät zeitlich und/oder räumlich begrenzte Gültigkeitsinformationen enthält, die mit im empfangenen Datentelegramm enthaltenen Daten verglichen werden.

## Claims

1. A method for automatically recording the use of fee-based transport means for the passenger transport by means of a user terminal of a user who uses the transport means, wherein at least one transmitter located in the area of the transport means sends data telegrams,
**characterized in**
**that** the transmitter emits the data telegrams in a unidirectional manner at specified time intervals and/or in dependence on the location of the transport means, wherein the data telegrams will be received by the user terminal, wherein the following steps are realized
• receiving and storing a data telegram emitted by a transmitter, which data telegram contains a location information item with respect to the location of the transmitter and/or fare or tariff information,
• receiving and storing at least one other data telegram emitted by a transmitter,
• processing the received data in consideration of data and algorithms present on the user terminal
**characterized in that**
a read-back receiver arranged in the transport means verifies the correct emission of the data telegrams sent in a unidirectional manner by the transmitter and in case of recognizing collisions and/or interferences it will initiate a frequency or channel change, such that the data telegrams will be sent on another frequency or on another channel.

2. A method according to claim 1, **characterized in that** the data telegrams contain at least one information item of the group of company ID, sequence number, date, time, location information, tariff information or transport means identification.

3. A method according to one of the preceding claims, **characterized in that** at least one data telegram is provided with an electronic signature, wherein the user terminal will verify this signature.

4. A method according to one of the preceding claims, **characterized in that** the user terminal will generate and store data sets about trips undertaken on the base of the received data telegrams.

5. A method according to one of the preceding claims, **characterized in that** trips undertaken will be stored in dependence on tariff regulations in the form of individual data sets for sections that are each relevant to billing.

6. A method according to one of the preceding claims, **characterized in that** the stored data will be transmitted in a collected form at time intervals to a central computer unit.

7. A method according to claim 6, **characterized in that** data that have been transmitted to a central computer unit are provided with an electronic signature by the user terminal.

8. A method according to one of the preceding claims, **characterized in that** prices for trips undertaken will be determined in dependence on tariff information and will be posted to a billing account.

9. A method according to claim 8, **characterized in that** tariff information required for determining the fares will be sent by the transmitter.

10. A method according to one of the preceding claims, **characterized in that** the user terminal contains validity information limited in time and/or space, which will be compared with data contained in the received data telegram.

## Revendications

1. Procédé de détection automatique de l'utilisation de moyens de transport payants destinés au transport de personnes par moyen d'un terminal d'utilisateur d'un utilisateur, qui utilise le moyen de transport, dans lequel au moins un émetteur disposé dans la zone du moyen de transport émet des télégrammes de données,
**caractérisé en ce**
**que** l'émetteur émet les télégrammes de données de manière unidirectionnelle à intervalles réguliers et/ou en fonction du lieu du moyen de transport, les télégrammes de données étant reçus par le terminal d'utilisateur, les étapes suivantes étant réalisées
• recevoir et stocker un télégramme de données émis par un émetteur, lequel télégramme de données contient une information de site par rapport à l'emplacement de l'émetteur et/ou des informations de prix de billet ou de tarifs,
• recevoir et stocker au moins un autre télégramme de données émis par un émetteur,
• traiter les données reçues en tenant compte de données et d'algorithmes, qui sont présents dans le terminal d'utilisateur
**caractérisé en ce qu'**
un récepteur de relecture disposé dans le moyen de transport vérifie l'émission correcte des télégrammes de données émis de manière unidirectionnelle par l'émetteur et dans le cas où il reconnaît des collisions et/ou des interférences, il initiera un changement de fréquence ou de canal, de sorte que les télégrammes de données seront émis sur une autre fréquence ou sur un autre canal.

2. Procédé selon la revendication 1, **caractérisé en ce que** les télégrammes de données contiennent au moins une information du groupe de ID entreprise, de numéro de séquence, de date, d'heure, d'information d'emplacement, d'informations de tarifs ou d'identification de moyen de transport.

3. Procédé selon l'une des revendications précédentes, **caractérisé en ce qu'**au moins un télégramme de données est muni d'une signature électronique, le terminal d'utilisateur vérifiant cette signature.

4. Procédé selon l'une des revendications précédentes, **caractérisé en ce que** le terminal d'utilisateur génère et mémorise des jeux de données par rapport à des trajets effectués sur la base des télégrammes de données reçus.

5. Procédé selon l'une des revendications précédentes, **caractérisé en ce que** des trajets effectués sont mémorisés en fonction des règlements tarifaires sous forme de jeux de données individuels pour des étapes, qui sont chacune soumises à la facturation.

6. Procédé selon l'une des revendications précédentes, **caractérisé en ce que** les données stockées sont transmises de manière collectée à une unité de traitement à des intervalles de temps.

7. Procédé selon la revendication 7, **caractérisé en ce que** des données transmise à une unité de traitement sont munies d'une signature électronique par le terminal d'utilisateur.

8. Procédé selon l'une des revendications précédentes, **caractérisé en ce que** des prix pour des trajets effectués sont déterminés en fonction d'informations tarifaires et sont comptabilisés sur un compte de paiement.

9. Procédé selon la revendication 8, **caractérisé en ce que** des informations tarifaires nécessaires pour déterminer les prix de billet sont émises par l'émetteur.

10. Procédé selon l'une des revendications précédentes, **caractérisé en ce que** le terminal d'utilisateur contient des informations de validité limitées dans le temps et/ou dans l'espace, lesquelles sont comparées avec des données contenues dans le télégramme de données reçu.
